(19) Europäisches Patentamt
European Patent Office
Office européen des brevets

(11) **EP 3 608 743 A1**

(12) **EUROPEAN PATENT APPLICATION**

(43) Date of publication:
**12.02.2020 Bulletin 2020/07**

(21) Application number: **19186601.1**

(22) Date of filing: **16.07.2019**

(51) Int Cl.:
**G05B 23/02** *(2006.01)*          **B21D 22/02** *(2006.01)*
**G05B 13/04** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **07.08.2018 PL 42657718**
**15.10.2018 PL 42739818**

(71) Applicant: **KH Automotive S.r.l.**
**85050 Tito Scalo (Potenza) (IT)**

(72) Inventor: **Mongiello, Michele**
**85050 Tito Scalo (Potenza) (IT)**

(74) Representative: **AOMB Polska Sp. z.o.o.**
**Ul. Emilii Plater 53**
**21st Floor**
**00-113 Warsaw (PL)**

(54)     **ARRANGEMENT AND METHOD FOR CONTROLLING THE PRESSING OF METAL SHEETS**

(57)     Arrangement and method for controlling the process (1) of pressing sheets, in particular of metal sheets, comprising:
- process sensors, associated with elements of equipment for pressing sheets (2), for measuring physical process parameters;
- a digital model (3) of the process of pressing sheets configured for digital recreation of said process of pressing sheets;
- an electronic control unit (4) communicating with said digital model (3) and connected to said process sensors and configured to receive measurement results from said process sensors,

characterised by comprising
- wear sensors, associated with elements of equipment for pressing sheets (2), for measuring physical wear parameters,
the electronic control unit (4) being connected to said wear sensors and configured to
receive measurement results from said wear sensors,
the digital model (3) of the process of pressing sheets comprising process parameters and wear parameters, and
the electronic control unit (4) being configured and programmed to perform specified actions.

FIG. 1

## Description

Field of the Invention

The present invention relates to an arrangement for controlling the manufacturing process by pressing sheets, in particular of metal sheet, and a method for controlling such a process, in order to optimise this manufacturing process.

Prior Art

The pressing of sheet-metal is one of the most frequently used manufacturing methods. Each day, millions of parts are produced by pressing, from small adapters of batteries to large body panels for mechanical vehicles.

Nevertheless, this manufacturing method is a complex method which requires the use of press, dies (including a binder), a material (semi-finished product) and controlling the machining process using appropriate forces.

Even in the case of using advanced techniques to this end, such as the finite element method (FEM) and computer control, it is often the case that the process is performed incorrectly.

Due to this, monitoring the status of the process of pressing sheets and diagnostics of errors in such a process are important for providing correct progress of the process.

Over the years, four different methods were suggested to accomplish this:

- development of online monitoring systems;
- development of error diagnostic systems;
- development of software systems for the Finite Element Analysis (FEA);
- design and construction of new types of controlled mechanical presses for metal machining.

Due to sensor systems and an analysis of signals, it is possible to provide online monitoring and diagnostics of errors in the manufacturing process involving the pressing of metal-sheets, taking into account two aspects:

- assessment of possible anomalies caused by unsuitable working conditions under which the press and the die operate;
- assessment of reliability of the used numerical models by a comparison of numeric and real results produced by means of a sensor network.

Document US 6341243B1 discloses a press brake provided with a set of sensors, including pressure sensors, communicating with a computer unit controlling the process and receiving tasks from a CAD-type system ( Computer Aided Design). The document discloses the use of a computer unit for precise selection of tools, press pressure and bending sequence necessary to perform bendings according to the design. The computer unit receives information from sensors of, e.g. force and position, in order to increase the precision of the metal sheet press brake bending process. The described document relates to the metal sheet press brake bending technology, which differs considerably from the process of pressing metal sheets, to which the present invention relates, in terms of construction of the press and machining tools, as well as process variables. A computer-controlled press brake performs a series of bendings by a certain angle calculated by a computer system, in specified intervals. The mathematical model used for a press brake considers technical problems inherent for the press brake bending process and it is not possible to use it to reduce errors typical of the process of pressing metal sheet elements. During the pressing of metal elements made of metal sheets, there are typical technical problems, such as reduction of wrinkles, irregular thinning of walls of elements or cracking of an element during pressing, which problems are absent in the case of a press brake.

Document CN107328787A discloses an arrangement for inspecting the quality of metal strips, consisting of a sensor in the form of a CCD camera for optical inspection of sheet metal strips and a neural network for analysing these images in order to detect any defects of the metal strip in the form of scratches, cracks or other surface defects. The solution described therein belongs to the area of machine vision and relates to an analysis of optical properties of elements. The document does not disclose how the acquired data could be used in the process of controlling a press for pressing metal elements made of metal sheets. Also, it is not disclosed how the neural network mentioned in the document is configured, or what mathematical model it implements. For this reason, information disclosed in the document is not useful for improving the process of pressing metal sheet elements.

Documents CN104942095A and CN105689458A disclose the solution of an automatic press provided with a metal-bending arrangement, pressure sensors, as well as an arrangement for measuring the thickness of metal and an ultrasonic system for measuring cracks in the produced elements. The solution discloses an arrangement capable of adjusting press pressure to the thickness of the machined material and correcting the value of this force if cracks in the material appear. The described solution is an automatic control arrangement of the sequential type, in which - when a change occurs, e.g. increased thickness of the material - the pressure changes proportionally. When cracks appear on an element, the pressure decreases proportionally to their number. Such a solution only detects cracks in elements, and if they occur it changes the press pressure. Advanced technical problems like preventing the appearance of wrinkles or irregular thinning or thickening of the walls of elements will not be detected properly, and the solutions disclosed in these documents do not solve these technical problems.

Document CN106623582A discloses a production line provided with a press and means for feeding material for machining and receiving the machined elements. The solution disclosed therein uses pressure sensors to detect the machined element in the press workcell or in significant places of the production line. Data from the sensors does not change the values of process variables for the bending and pressing of elements, only triggering these processes. The information acquired from the sensors is not processed by a mathematical model, nor is it used to remedy possible defects of the produced elements.

None of the documents known in prior art, including in particular none of the documents indicated above, considered individually or in any combination, disclose any wear sensors for the elements of equipment for pressing sheets, nor do they suggest a model considering the wear parameters measured by these sensors.

The object of the invention

The object of the present invention is to propose an innovative process control arrangement and the associated method for controlling the process of pressing sheets, in particular of metal sheet, which would allow better control of this process and product quality, and also allow predicting the necessity of maintenance or repair of the equipment for pressing sheets.

The Essence of the Invention

An arrangement for controlling the process of pressing sheets, in particular of metal sheet, comprising:

- process sensors, associated with elements of equipment for pressing sheets, for measuring process parameters - that is physical quantities associated with the process of pressing sheets;
- a digital model of the process of pressing sheets configured for digital recreation of said process of pressing sheets;
- an electronic control unit communicating with said digital model and connected to said process sensors and configured to receive measurement results from said process sensors,

which according to the invention is characterised by comprising

- wear sensors, associated with elements of equipment for pressing sheets for measuring wear parameters - that is physical quantities associated with the wear of equipment for pressing sheets,

while the electronic control unit is connected to said wear sensors and configured to receive measurement results from said wear sensors,
the digital model of the process of pressing sheets comprises process parameters and wear parameters,
and moreover, the electronic control unit is configured and programmed to:

- collecting data on the pressing process, including process parameters and wear parameters,
- processing the process parameters and wear parameters by means of the digital model, determining data on the status of the pressing process and comparing it to data corresponding to nominal process conditions in order to determine deviation of the progress of the pressing process from the nominal progress;
- analysing the data in order to provide improvement of the digital model;
- correcting the pressing process parameters in order to minimise deviations of the progress of the pressing process from the nominal progress;
- analysing the data in order to predict maintenance or repair of the equipment for pressing sheets.

Preferably, the digital model comprises three numerical models (A1, A2, A3), namely:

- a traditional numerical model for simulating metal machining (A1), involving rigid tools;
- a non-traditional numerical model for simulating metal machining (A2), involving physical interactions between elements of the equipment for pressing sheets, in particular sheets and dies;
- a structural numerical model (A3) comprising a structure of elements of the equipment for pressing sheets, in particular dies and press,

wherein the non-traditional model (A2) is used to adjust the parameters of the traditional model (A1) and deliver input data for the structural model (A3).

Preferably, the interface of the electronic control unit with the digital model is an interface using the Cyber-Physical Systems (CPS) technology.

The invention also comprises a method for controlling the process of pressing sheets, in particular of metal, comprising:

- the acquisition of data via process sensors, associated with elements of equipment for pressing sheets, for measuring process parameters - that is physical quantities associated with the process of pressing sheets;
- controlling the process via an electronic control unit communicating with the digital model of the process of pressing sheets, configured for digital recreation of the process of pressing sheets and connected to said process sensors, and configured to receive measurement results from said process sensors,

Characterised in that it comprises:

- the acquisition of data by wear sensors, associated with elements of equipment for pressing sheets, for measuring wear parameters - that is physical quantities associated with the wear of equipment for pressing sheets,

wherein the electronic control unit is connected to said wear sensors and configured to receive measurement results from said wear sensors,
and the digital model of the process of pressing sheets comprises process parameters and wear parameters,
while the electronic control unit executes the following steps:

- collecting data about the pressing process, including process parameters and wear parameters,
- processing the process parameters and wear parameters by means of the digital model, determining data on the status of the pressing process and comparing it to data corresponding to nominal process conditions in order to determine deviation of the progress of the pressing process from the nominal progress;
- analysing the data in order to provide improvement of the digital model;
- correcting the pressing process parameters in order to minimise deviations of the progress of the pressing process from the nominal progress;
- analysing the data in order to predict maintenance or repair of the equipment for pressing sheets.

Particularly preferably, the method according to the invention is implemented in the arrangement according to the invention.

In the present description, a "medium with a computer program for implementation of the method according to the invention" is to be understood as referring to means readable by a computer, comprising arrangement control instructions according to the invention in order to implement the method according to the invention. Referring to "at least one computer" is to be understood as emphasising the possibility to implement the present invention in a modular and/or dispersed form.

The arrangement and method used to control the process of pressing sheets, in particular of metal, according to the invention, provides numerous technical advantages, including:

- improving the lifespan of press, due to a response to possible overloads or control over crosswise forces;
- improving the lifespan of dies, due to a response to possible overloads, as well as thanks to the control of friction, which can cause damage or wear of active die surfaces;
- improving the efficiency of the manufacturing process due to limitation of the risk associated with a high share of waste;
- improving the quality of the product, due to an identical thickness reduction or increase in %, diminished risk of the generation of wrinkles or insufficiently formed areas;
- predicting the necessity of maintenance or repair of the equipment for pressing sheets.

Brief description of the drawings

The object of the invention is presented below in embodiments, with reference to the attached drawing, in which:

- Fig. 1 presents schematically an arrangement for controlling the process according to the invention, used in the manufacturing process by pressing metal sheets;
- Fig. 2 presents schematically the procedure of initiating the method according to the invention;
- Fig. 3A and 3B present schematically information which can be acquired from the arrangement according to the invention;

- Fig. 4 and 5 present diagrams depicting action of the electronic control unit comprised in the arrangement according to the invention;
- Fig. 6 presents a graph depicting the action of the digital model comprised in the arrangement according to the invention;
- Fig. 7 and 8 depict an arrangement interacting with the production process;
- Figs. 9 and 10 depict subsequent steps of the method according to the invention;
- Fig. 11 depicts general steps of the method according to the invention.

Detailed description of preferred embodiments of the invention

The following examples are presented only in order to clarify the invention and explain its individual aspects, without harming the scope of the invention which is defined by the appended claims. Unless indicated otherwise, the following examples use standard materials and methods known in the field, or abide by the guidelines of producers of the specified devices and suppliers of the specified methods.

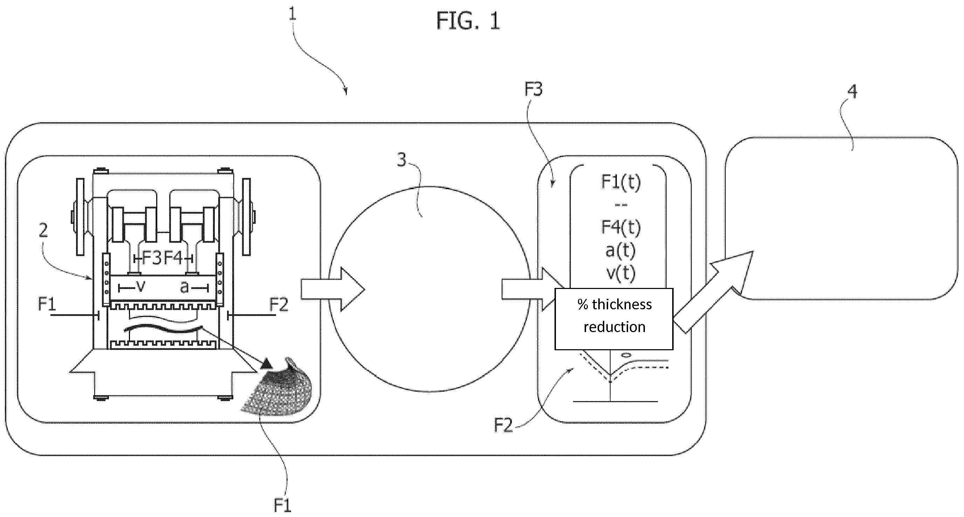

Fig. 1 shows schematically an arrangement for controlling the process of pressing metal sheets, used in order to optimise this process.

As presented schematically, various elements of the device for pressing metal sheets 2 (the press) are provided with various types of process sensors (transducers), for example force sensors (F1, F2, F3, F4), speed sensors (v) and acceleration sensors (a), in order to measure numerous physical variables.

As will be described in full below, the control arrangement 1 according to the invention comprises an electronic control unit 4 configured to receive data acquired by means of said sensors and delivering much useful information on deviation from the nominal progress of the process of pressing metal sheets.

Moreover, the proposed elements along with the press can be additionally connected to specific sensors capable of monitoring the quality of the product. For example, on several samples (e.g. every 50th machined item) a grid for measuring the main and secondary deformation F1 can be etched (presented schematically in fig. 1) along with a position on the FLD graph, and the proper data can be processed at the end of the pressing operation, resulting in an immediate product quality assessment.

FLD stands for a pressing plasticity limitation diagram. It is used in machining metal sheets to predict the forming behaviour of metal sheets.

In reality, after manufacturing a certain number of parts, a real graph FLD F2 will be available (fig. 1) and it can be confronted with the resulting data on speed, acceleration, forces and the measured % of thickness reduction (F3 in fig. 1).

Average deviation from the plastic limit curve and the data matrix [F1(t), F2(t), F3(t), F4(t), a(t), v(t), thickness reduction %] will be available in order to be processed by the electronic control unit 4 present in the arrangement.

Moreover, the arrangement according to the invention provides the acquisition of data by wear sensors, associated with elements of equipment for pressing sheets 2, for measuring wear parameters - that is physical quantities associated with the wear of equipment for pressing sheets 2, and the digital model 3 of the process of pressing sheets comprises process parameters and wear parameters, while the electronic control unit 4 performs, e.g. an analysis of data in order to predict maintenance or repair of the equipment for pressing sheets 2.

The arrangement for controlling the process according to the invention also comprises a digital model 3 of the process of pressing metal sheets, configured to digitally recreate the physical process of pressing metal sheets. The digital model 3 may be used to monitor a prescriptive analysis in real time and to test predictive maintenance in order to optimise process efficiency.

The digital model 3 also provides data which may be used to improve the physical design of the product during the whole lifespan of the product.

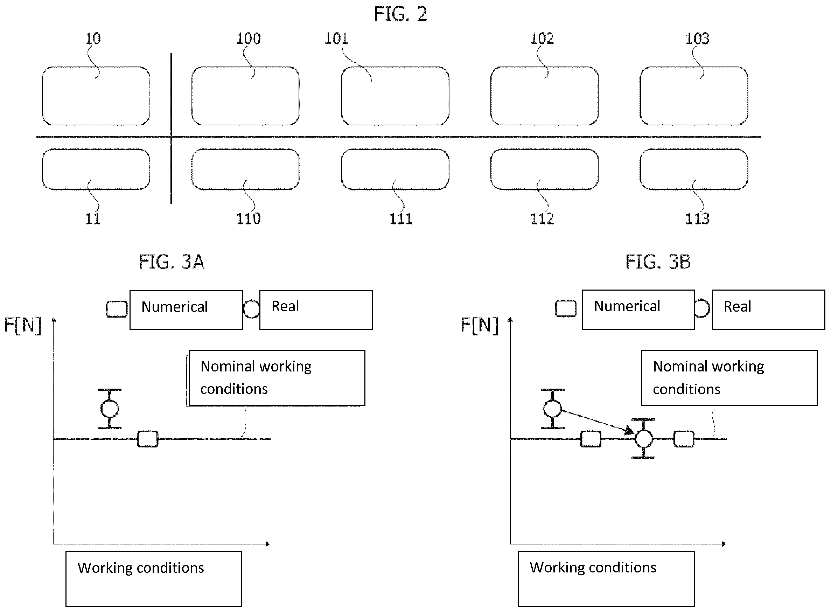

For example, fig. 2 presents a Reality/Simulation matrix. A press (block 100), a machined item (block 101), a die (block 102) and a pressing method (block 103) are provided for a specific real process (block 10). For each of these objects it is possible to provide simulations (block 11) of their behaviours in real time, in particular a simulation of structural fatigue (block 110) for the press 100, modelling of material (block 111) for the machined element 101, construction fatigue simulation (block 112) for the die 102 and metal machining simulation (block 113) for the pressing method 103.

In practice, the arrangement for controlling the process 1 according to the invention and the associated method provide a numeric deterministic result of simulations and stochastic physical data (for example: force, velocity, etc.). This real data is characterised by an average value and standard deviation.

The first example of useful information which can be acquired from arrangement 1 is presented in fig. 3A (wherein force has been chosen as an example).

As can be seen, the value of real force is higher than the numeric value; this means that the real behaviour of the arrangement is more critical than the simulated one (the arrangement acts in overload) in terms of fatigue.

Fig. 3B presents the second example - the impact of a decrease in speed on the force. This happens in a case when the press is not overloaded and it is possible to use this information in order to decrease speed for retaining durability of the machine.

Now, the process variables of a manufacturing process involving the pressing of metal sheets will be described below.

Process variables in cold machining of a metal sheet can be grouped into characteristics of the working material and characteristics of the process.

In a specific case of material features, the process variables include:

- plastic limit, $\sigma_y$;
- strengthening parameter, n;
- plastic anisotropy ratio, R.

In terms of process characteristics, the metal sheet machining process is affected mainly by:

- coefficient of friction at the pressure joints of metal sheets/dies, $\mu$;
- pressure, BHF;
- cutting speed, S;
- press and die rigidity, $k_{press}$, $k_{die}$.

All of the abovementioned variables can be grouped in a vector of process variables in the following manner: ($\mu$, BHF, S, $\sigma y$, n, R, $k_{press}$, $k_{die}$) = vector of process variables.

Of course, when the press and the die have already been selected, the rigidity $k_{press}$, $k_{die}$ associated therewith should not be considered as variables, since it is not possible to change their values, but they can provide useful information on the deformation of these elements under their working conditions.

During the real manufacturing process, an operator may only work with the first two variables, specifically in terms of the pressure, BHF, and the cutting speed, S.

The vector of process variables affects process responses.

A process response can be described as a vector of the following elements:

[Fz, Fx, Fy, FLD, T, Ax, Ay, Az] = vector of general process responses, in which:

- Fz, Fx, Fy are force components in the directions x, y and z;
- FLD stands for the Formability Limit Diagram;
- T is the temperature;
- Ax, Ay and Az are elements of acceleration measured in the directions x, y and z.

The above responses are extremely important, since due to them it is possible to evaluate the quality of the process and the end product.

Referring to Y, a function describing an ongoing process has been provided, which is a function of the abovementioned vector of process variables:

$$Y=Y\ (\mu,\ BHF,\ S,\ \sigma_y,\ n,\ R,\ k_{press},\ k_{die})$$

The function Y converts process variables into process responses.

From an operational point of view, it is very important to notice that only for several process variables (in particular BHF, S) it is possible to perform an experimental assessment of their impact on the method: in reality, it is difficult to control some of the process variables, such as friction and mechanical properties of the material ($\sigma_y$, n, R).

Moreover, as mentioned above, the variables $k_{press}$, $k_{die}$ should not be considered as variables, since they cannot be changed, but their values can be used to monitor deformation of the press.

For these reasons, it is necessary to develop a digital model 3 of the working process (a digital twin of the physical process), in order to know the impact of all process variables ($\mu$, $\sigma_y$, n, R, $k_{press}$, $k_{die}$) on process responses.

Moreover, the digital model 3 could be used to perform an analysis of data in order to optimise the method in terms of quality of the process and product, and to predict the necessity of maintenance or repair of the equipment for pressing sheets 2.

A sample implementation of this is as follows:

Efficiency of the process of pressing metal sheets can be assessed by some results produced using the finite element analysis method, such as thickness distribution, plasticity, wrinkles and stretching.

In order to avoid the generation of defects during machining, criteria of these defects can be defined in order to assess the plasticity of metal sheet parts. According to FEA results, the strain values of elements against parts for pressing can be used to calculate the values of these criteria, automatically, in order to assess deformability of an element by means of Formability Limit Diagrams (FLD).

The aim is to attain the best combination of process or design variables of geometry, which would lead to the desired metal sheet with no defects such as cracks, wrinkles, insufficient stretching, varying thickness, etc.

Cracking: When the primary strains of certain elements are above the plastic limit curve (FLC, the line ($\varphi(\varepsilon_2)$) or a safety margin $\Box\varepsilon_2$), a crack may occur in this area of the part, and a higher value of distance means a higher tendency to crack. Squares of distances for all elements can be added as an objective cracking function:

$$Obj_{fracture} = \begin{cases} \sum_{i=1}^{n}(d_f^i)^2 = \sum_{i=1}^{n}(\varepsilon_1^i - \phi(\varepsilon_2^i))^2; \ldots\ldots\ldots se\ldots\varepsilon_1^i > \phi(\varepsilon_2^i). \\ 0 \ldots\ldots\ldots\ldots\ldots\ldots\ldots\ldots\ldots\ldots\ldots\ldots\ldots\ldots\ldots se\ldots\varepsilon_1^i \leq \phi(\varepsilon_2^i). \end{cases}$$

Wrinkles: When the primary strains of certain elements are below the wrinkle limit curve (WLC, line $\psi(\varepsilon_2)$), wrinkles may occur in this area of the part, and a higher value of distance means a higher tendency to wrinkle. Wrinkling criteria can be defined by the distance from the main deformation of each element to its WLC. Squares of distances for all elements are added as an objective wrinkling function:

$$Obj_{wrinkle} = \begin{cases} \sum_{i=1}^{n}(d_w^i)^2 = \sum_{i=1}^{n}(\psi(\varepsilon_2^i) - \varepsilon_1^i)^2; \ldots\ldots\ldots se\ldots\varepsilon_1^i < \psi(\varepsilon_2^i). \\ 0 \ldots\ldots\ldots\ldots\ldots\ldots\ldots\ldots\ldots\ldots\ldots\ldots\ldots\ldots\ldots se\ldots\varepsilon_1^i \geq \psi(\varepsilon_2^i). \end{cases}$$

Stretching: When using high-strength steel, the spring-back problem is of key significance. In order to reduce spring-back caused by elastic deformation, it is necessary to provide minimum stretching in the plastic range. The criterion of insufficient stretching can be defined by a difference in the ratio of main element strain to minimised effective plastic strain. Squares of differences for all elements are added as an objective function of insufficient stretching, as presented in the following equation:

$$Obj_{Stretch} = \begin{cases} \sum_{i=1}^{n}(d_s^i)^2 = \sum_{i=1}^{n}(\overline{\varepsilon}_{min}) - \overline{\varepsilon}^i)^2; \ldots\ldots\ldots se\ldots\overline{\varepsilon}^i < \overline{\varepsilon}_{min}. \\ 0 \ldots\ldots\ldots\ldots\ldots\ldots\ldots\ldots\ldots\ldots\ldots\ldots\ldots\ldots se\ldots\overline{\varepsilon}^i \geq \overline{\varepsilon}_{min}. \end{cases}$$

Thickness: Changing thickness is a very important criterion in machining metal sheets and it can be determined by the sum of squares of the thinning factor of each element. This is presented in the following equation:

$$Obj_{thick} = \sum_{i=1}^{n}(d_t^i)^2 = \sum_{i=1}^{n}\left(\frac{t_i}{t_0} - 1\right)^2$$

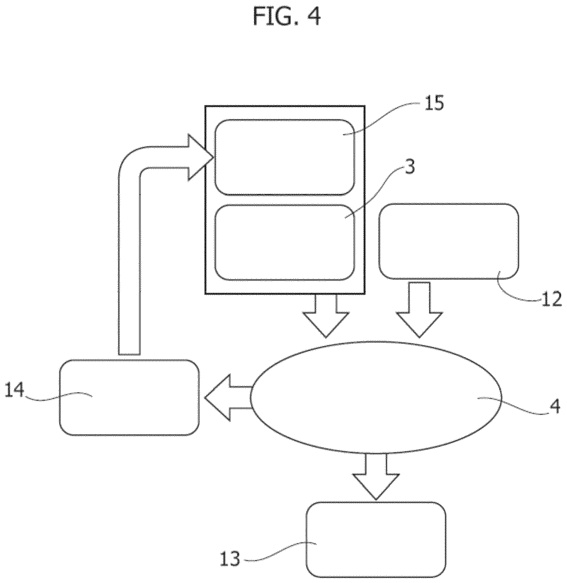

Fig. 4 explains schematically the action of the electronic control unit 4 in monitoring the status for the process of pressing metal sheets.

Based on information supplied by the digital model 3 (due to simulation using the finite element method) and experimentally collected acquired signals (the stage represented by block 12) supplied by sensors associated with elements of equipment for pressing metal sheets 2, the electronic control unit 4 is configured to determine how the production process evolves, and subsequently to control the process via feedback (the stage represented by block 13) in order to increase the quality of the process and product in accordance with the assumed standards.

Moreover, the electronic control unit 4 is also configured to perform analyses of data in order to ensure improvement of the numerical model (the stage represented by block 14) in order to attain, at the same time, improvement of this model (the stage represented by block 15).

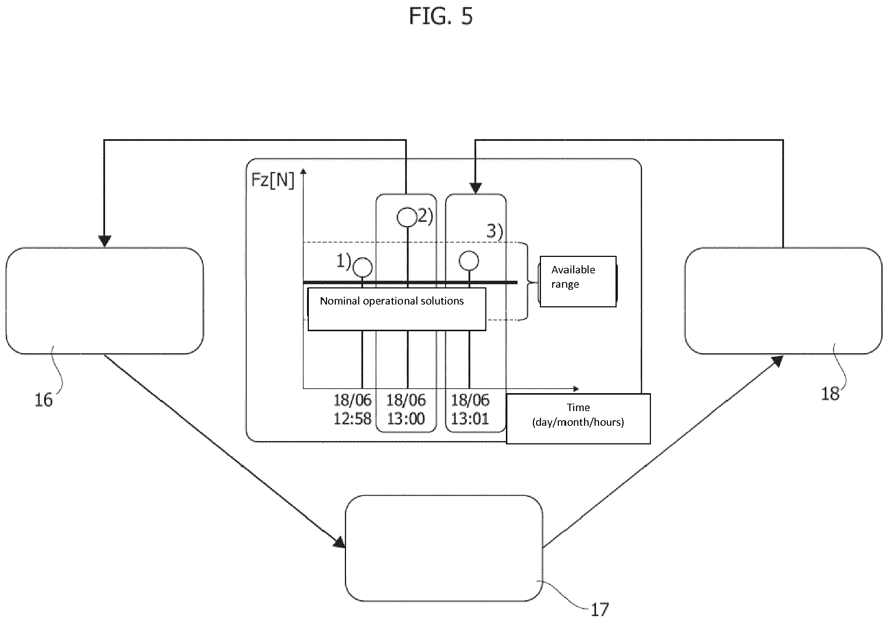

An example of the action of the electronic control unit 4 is presented in fig. 5.

After a normal phase of work close to nominal conditions (time = 12.58), a change in vertical reaction force was detected (Fz) (time = 13.00).

The arrangement according to the invention is configured to detect changes in process responses (the stage indicated by block 16), defining new process conditions in terms of values attributed to controlled variables (the stage indicated by block 17), in order to attain the process (the stage indicated by block 18) within a permitted range of deviation (time = 13.01).

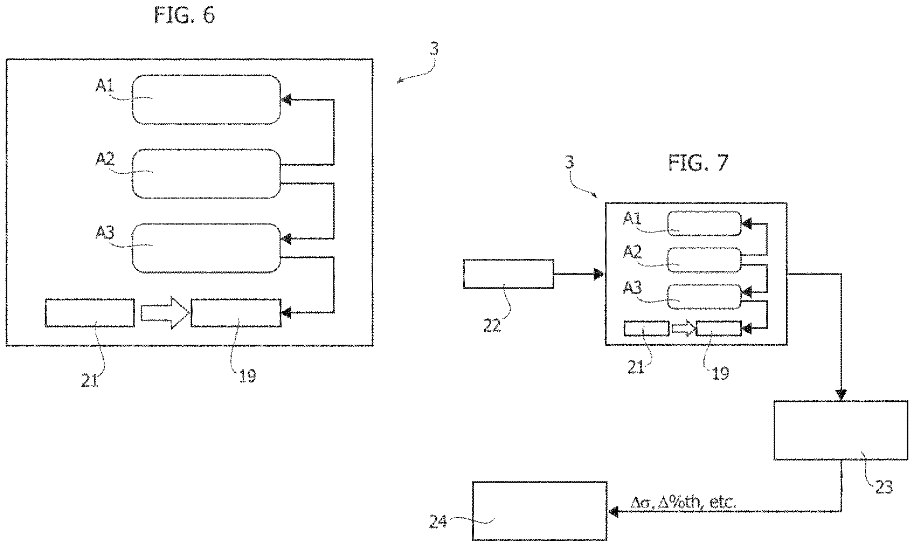

In a preferable embodiment, the digital model 3 consists of three numerical models (see fig. 6):

- a traditional numerical model for simulating metal machining (A1), comprising rigid tools;
- a non-traditional numerical model for simulating metal machining (A2), comprising physical interactions between elements of the equipment for pressing sheets (2), in particular sheets and dies;
- a structural numerical model (A3) comprising a structure of elements of the equipment for pressing sheets (2), in particular dies and press,

wherein the non-traditional model (A2) is used to adjust the parameters of the traditional model (A1) and deliver input data for the structural model (A3).

In accordance with fig. 6, the results of a structural analysis and a priori criteria defined for dies and the press (block 21) enable a comparison between the considered working conditions and reference values determined by the adopted criteria (the comparison stage represented by block 19).

Fig. 7 shows the manner in which numerical models interact with the production process, in order to improve the quality of the product and the efficiency of the manufacturing process, for which the process control arrangement 1 according to the invention is used.

The digital model 3 receives experimental input signals from the production line (block 22) and delivers information on any critical problems (block 24) and about what is happening to the process from the standpoint of models A2, A3 (block 23). An example of information on critical problems involves excessive thinning or possible wrinkling of the cut-out and possible structural overloads of the dies and press.

Methodology related to the method of using data from the working line to improve the reliability of numerical models has been determined.

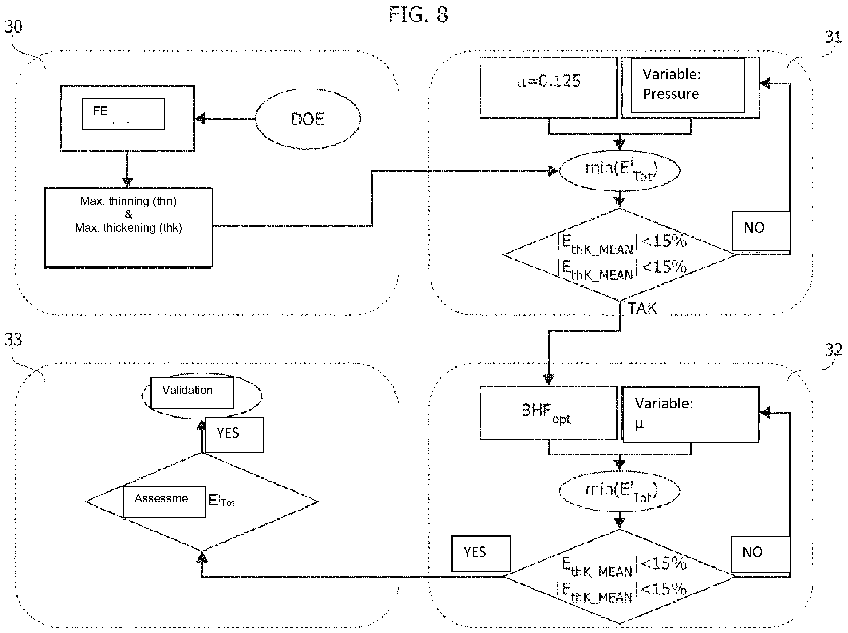

In order to determine the cut-out pressure force (BHF) and Coulomb's friction coefficients ($\mu$) on the tool-cut-out interface, an automated procedure according to fig. 8 has been developed.

The procedure has the following four blocks:

- batch forming simulations (FE) (block 30);
- cut-out pressure identification (block 31) ($\mu$ is constant);
- friction calibration (block 32);
- model validation (block 33);

Based on a specific design of computer experiments (DOCE), block 30 "batch forming simulations (FE)" activates in a batch mode the simulations of FEM generation and distinguishes the numeric values of maximum thinning (thn) and maximim thickening (thk). Of course, the numerical "design" complies with the implemented experimental plans (in terms of investigated machining conditions). The acquired numeric data is used to develop specific regression models for maximum thinning (thn) and maximum thickening (thk). They can serve as a simple computational replacement model for the optimisation problem (instead of performing an FEA batch task for each function assessment during optimisation).

The Radial Basis Functions (RBF) technique is used to generate regression models. Using the abovementioned models to calculate maximum thinning (thn) and maximum thickening (thk), block 31 (BHF identification) allows the identification of the best BHF. Instead, because Coulomb's friction coefficient depends on the conditions of forming, and it should be subsequently determined for each of the tested machining conditions separately, in this phase of calculations it is considered to be constant.

After identifying the best BHF, block 32 (friction calibration) allows finding the "best" of Coulomb's friction coefficients which minimise discrete errors associated only with certain investigated conditions of forming.

Finally, block 33 (model validation) allows validating Coulomb's friction model; if discrete errors in selected points are high, the procedure returns to block 32 and a new friction model is calibrated, until all discrete errors are minimised.

As mentioned above, the electronic control unit 4 uses mathematical modelling to describe the process signal and to extract information in the context of process monitoring (PM) and defect diagnostics (FvD) in order to optimise the production process.

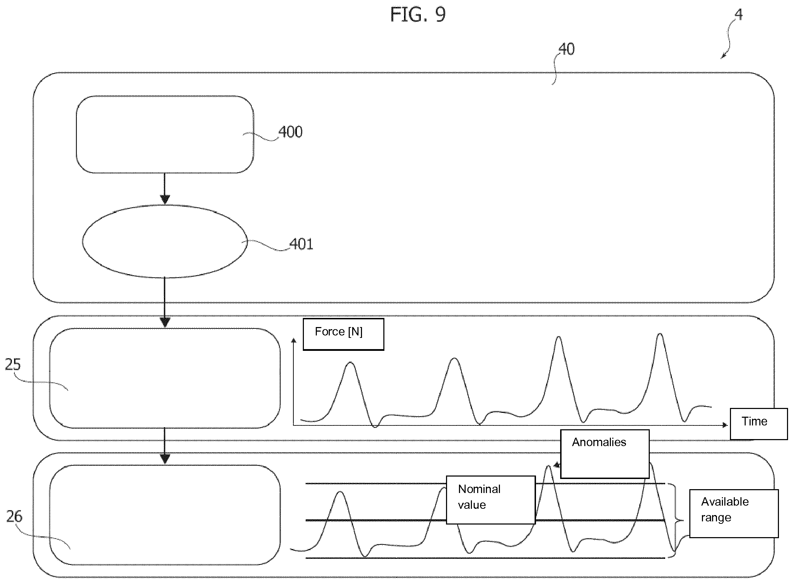

Fig. 9 shows schematically the manner in which the electronic control unit 4 acts in these areas: the hardware and software architecture core is a main module 40 which should be capable of performing the following actions:

- acquire signals from sensors (block 400);
- perform modelling in order to transform sensor signals based on a more useful data structure (block 401).

Next, after detecting the process status (block 25) this data will be used to compare with what corresponds to nominal working conditions and permitted ranges (block 26).

After detecting an anomaly, the electronic control unit 4 will correct the pressing process parameters in order to minimise deviations of the progress of the pressing process from the nominal progress - in such a manner that possible deviations would fall within the permitted range.

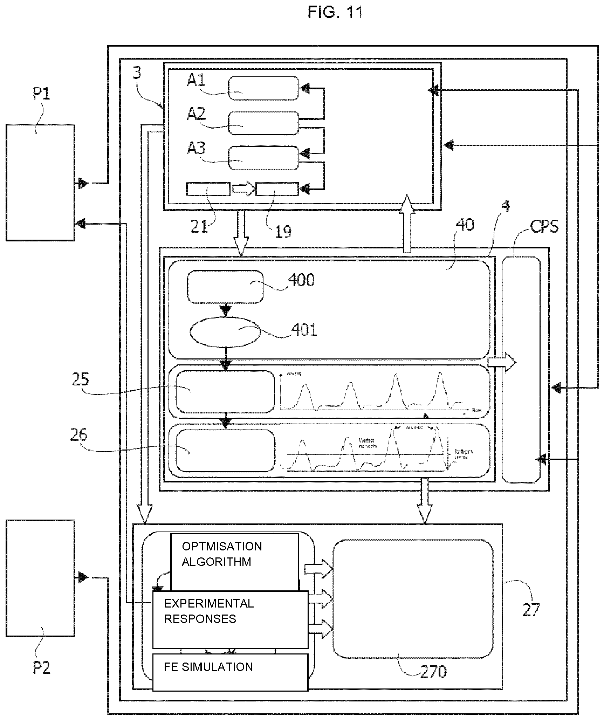

The interface of the main module 40 of an electronic control unit with a digital model 3 may be made using the Cyber Physical Systems CPS technology (fig. 11). CPS may be implemented with several types of sensors for identifying their surroundings and its status. In terms of applications for monitoring the process status - this results in an enormous amount of data from sensors related to: loads, temperatures, machine parameters and environmental conditions, which have not yet been considered.

For the purposes described above, the main module 40 of the electronic control unit 4 is configured to use modelling techniques which are most suitable for applications as regards metal machining. A list of such techniques is presented below.

Bayesian networks are a commonly used machine learning technique for diagnosing defects. Bayesian networks are a directed non-cyclical graph whose nodes represent random variables, and their conditional dependences are presented by directional arcs connecting nodes. Modelling of a problem by means of Bayesian networks requires determining the network structure and probabilities for each node. Precise construction of a Bayesian network tree structure based on data is an NP-hard problem. A Bayesian network is a white box, since graphical representation intuitively facilitates the user's comprehension of interactions between model variables. It is useful for modelling uncertainties and it can be easily used to model hierarchical levels of numerous causes and effects with data originating from numerous sources, which usually takes place in production systems.

The advantages of this technique are as follows:

- intuitively easy to comprehend;
- good for modelling uncertainties (may be used to model hierarchical levels of numerous causes and effects).

Disadvantages can be summarised in the following way:

- the tree structure causes initialisation to be generally harder;
- construction of the tree structure may be difficult.

Artificial neural network ANN is a non-parametric machine learning algorithm inspired by the functioning of human central nervous system. The adaptive nature provides powerful modelling ability adjusted to non-linear relations between features.

The artificial neural network is used in numerous defect diagnostics applications. In the case of complex problems with numerous layers and nodes, training time in the network may be considerable. The direct use of data from analogue sensors or multidimensional data sensors for the application of FD requires a signal processing technique or dimension reduction techniques - in the case of multidimensional data - combined with the machine learning technique.

The main advantages of this technique are as follows:

- it can model non-linear complex problems with high accuracy;
- relatively easy to initiate, no need to determine grid structure like in the case of BN.

Main disadvantages can be summarised in the following way:

- the model is not easy to interpret and it does not handle uncertainty in input data;
- compute intensity usually makes the convergence slow during training;
- a tendency toward overadjustment.

Support Vector Machine (SVM) uses various kernel functions, such as the radial base function (RBF) or a polynomial kernel, in order to find a hyperplane which provides the best division of data from its classes and has a good classification efficiency when used with small training sets. The successfully used area of application of the SVM involves prediction. The main advantages of this technique are as follows:

- perfect for modelling linear and non-linear dependences;

- calculation time is relatively quick compared to ANN;
- has a tendency towards generalisation even with a limited amount of training data.

Main disadvantages can be summarised in the following way:

- selection of kernel function parameters is difficult;
- it is not easy to introduce knowledge about a domain;
- it is difficult to understand the learned function.

Hidden Markov model HMM is an extension of the Markov chain model used to estimate probability distributions for state transitions and measurement results in a dynamic process, considering unobservable states of the process.
The HMM is used in diagnosing defects of both continuous and discrete production systems. Similar to the case of an analogue sensor signal used along with the ANNy, the HMM has been used along with advanced signal processing techniques in order to discover the source of defects in production uses.
The main advantages of this technique are as follows:

- excellent for modelling processes with unobservable states.

Main disadvantages can be summarised in the following way:

- the training process is usually compute-intensive.

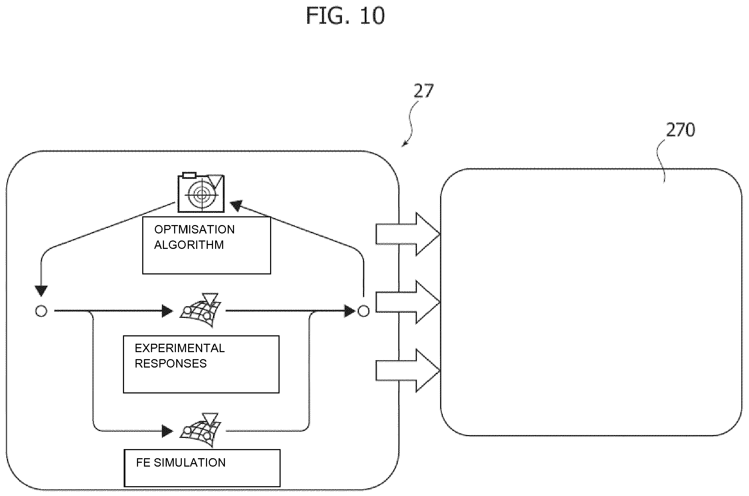

In accordance with fig. 10, the electronic control unit 4 is also configured to perform an optimisation procedure 27 in order to find a combination of method parameters which allows optimisation of the target function (indicated by means of block 270) defined as follows:

- $Y=Y$ ($\mu$, BHF, S, $\sigma_y$, n, R, $k_{press}$, $k_{die}$) (explained above)
- subject to physical bonds.

Relations between input and output parameters will be obtained by means of the modelling methodology presented above (the stage indicated in fig. 10 by means of the "experimental response component") and using the FE simulations of metal sheet machining (the stage indicated in fig. 10 as "FE simulations"). The generated response models for selected output responses will undergo an optimisation procedure developed based on proper optimisation algorithms (the stage indicated in fig. 10 with the "optimisation algorithm element"). The aim will be to find combinations of input parameters which minimise/maximise the target function.
Various optimisation techniques may be used, wherein a summary of the most suitable techniques for uses as regards the pressing of metal sheets is as follows:
Adaptive simulated annealing (ASA) provides a solution with a minimum cost, for a problem which potentially has a large number of solutions. It discerns local optima. The ASA algorithm is very well suited for solving highly non-linear problems by means of short analytical programs, when finding a global optimum is more important than quick improvement of a design.
This helps visualise problems presented by complex systems such as a geographic area. For example, let us consider a mountain range with two "parameters", e.g. along the north-south and east-west directions. We want to find the lowest valley in the area. The ASA approaches this problem similar to a bouncing ball which may bounce in the mountains from a valley to a valley. We begin with high "temperature", where the temperature is an ASA parameter which imitates the effect of a quickly moving particle in a hot object, such as hot molten metal, therefore enabling very high bouncing of the ball and the ability to jump over any mountain to gain access to each valley, provided a sufficient number of bounces is taken into account. When the temperature is lower - the ball cannot jump as high, and it can get stuck in traps in relatively smaller valley areas.
Multi-Island Genetic Algorithm (MIGA) divides a population into several islands. MIGA performs traditional genetic operations on each island separately, and subsequently the individuals migrate between islands. MIGA searches multiple designs and multiple locations in the design space.
In the multi-island genetic algorithm (MIGA), similar to other genetic algorithms, each design point is viewed as a person with specified usefulness value based on target function value and restriction penalty. An individual with a better value of the target and penalty functions has a higher adjustment value. Each population of individuals (a set of design points) is changed via genetic operations of "selection", "crossing" and "mutation". Each design in the population is subsequently assessed and its usefulness is determined. The new design population is selected from the original set of designs: a process based on survival of the best adjusted pattern. MIGA retains the best individuals from the previous generation without changes. This operation guarantees transferring the best genetic material to the child generation.

The main feature of the multi-island genetic algorithm which distinguishes it from traditional genetic algorithms is the fact that each population of units is divided into several sub-populations called "islands". All traditional genetic operations are performed for each sub-population separately. Some individuals are subsequently selected from each island and periodically migrate to various islands.

Multicriteria optimisation of a particle swarm (MOPS) imitates the social behaviours of animal groups, such as bird flocks or fish shoals. The process of finding an optimal design point is compared to the feeding activity of these organisms. Particle swarm optimisation is a search method based on population, in which individuals (called particles) continuously change their position (called state) in the search area. In other words, these particles "fly" in the design space, looking for the best position. The best position encountered by a particle and its neighbours along with the current speed and inertia are used to decide about the next position of the particle.

Interaction of the arrangement for controlling the process 1 according to the invention with the real process of pressing metal sheets is described below, in accordance with fig. 11.

The real process (block P1) and the real product (block P2) supply the digital model 3 and main module 40 of the electronic control unit 4.

After an analysis of data, the digital model 3 and the main module 40 interact with the optimisation module (block 27) in order to determine the best working conditions for attributing to the real method P1 according to specified target functions and technological restrictions.

**Claims**

1. An arrangement for controlling the process (1) of pressing sheets, in particular of metal sheet, comprising:

   - process sensors, associated with elements of equipment for pressing sheets (2), for measuring process parameters - that is physical quantities associated with the process of pressing sheets;
   - a digital model (3) of the process of pressing sheets configured for digital recreation of said process of pressing sheets;
   - an electronic control unit (4) communicating with said digital model (3) and connected to said process sensors and configured to receive measurement results from said process sensors,

   **characterised in that** it comprises

   - wear sensors, associated with elements of equipment for pressing sheets (2), for measuring wear parameters - that is physical quantities associated with the wear of equipment for pressing sheets (2),

   while the electronic control unit (4) is connected to said wear sensors and configured to receive measurement results from said wear sensors,
   the digital model (3) of the process of pressing sheets comprises process parameters and wear parameters,
   and moreover, the electronic control unit (4) is configured and programmed to:

   - collecting data about the pressing process, including process parameters and wear parameters,
   - processing the process parameters and wear parameters by means of the digital model (3), determine data on the status of the pressing process and comparing it to data corresponding to nominal process conditions in order to determine the deviation of the progress of the pressing process from the nominal progress;
   - analysing the data in order to provide improvement of the digital model (3);
   - correcting the pressing process parameters in order to minimise deviations of the progress of the pressing process from the nominal progress;
   - analysing the data in order to predict maintenance or repair of the equipment for pressing sheets (2).

2. The arrangement according to claim 1, in which the digital model (3) comprises three numerical models (A1, A2, A3), namely:

   - a traditional numerical model for simulating metal machining (A1), involving rigid tools;
   - a non-traditional numerical model for simulating metal machining (A2), involving physical interactions between elements of the equipment for pressing sheets (2), in particular sheets and dies;
   - a structural numerical model (A3) comprising a structure of elements of the equipment for pressing sheets (2), in particular dies and press,

wherein the non-traditional model (A2) is used to adjust the parameters of the traditional model (A1) and deliver input data for the structural model (A3).

3. The arrangement according to claim 1 or 2, in which the interface of the electronic control unit (4) with the digital model (3) is an interface using the Cyber-Physical Systems (CPS) technology.

4. A method for controlling the process of pressing sheets, in particular of metal, comprising:

- the acquisition of data via process sensors, associated with elements of equipment for pressing sheets (2), for measuring process parameters - that is physical quantities associated with the process of pressing sheets;
- controlling the process via an electronic control unit (4) communicating with the digital model (3) of the process of pressing sheets configured for digital recreation of the process of pressing sheets and connected to said process sensors, and configured to receive measurement results from said process sensors,

**characterised in that** it comprises

- the acquisition of data by wear sensors, associated with elements of equipment for pressing sheets (2), for measuring wear parameters - that is physical quantities associated with the wear of equipment for pressing sheets (2),

wherein the electronic control unit (4) is connected to said wear sensors and configured to receive measurement results from said wear sensors,
and the digital model (3) of the process of pressing sheets comprises process parameters and wear parameters, while the electronic control unit (4) executes the following steps:

- collecting data on the pressing process, including process parameters and wear parameters,
- processing the process parameters and wear parameters by means of the digital model (3), determining data on the status of the pressing process and comparing it to data corresponding to nominal process conditions in order to determine the deviation of the progress of the pressing process from the nominal progress;
- analysing the data in order to provide improvement of the digital model (3);
- correcting the pressing process parameters in order to minimise deviations of the progress of the pressing process from the nominal progress;
- analysing the data in order to predict maintenance or repair of the equipment for pressing sheets (2).

5. The method according to claim 4 realised in an arrangement according to claim 1, 2 or 3.

EP 3 608 743 A1

FIG. 1

EP 3 608 743 A1

FIG. 2

10    100    101    102    103

11    110    111    112    113

FIG. 3A

Numerical    Real

F[N]

Nominal working
conditions

Working conditions

FIG. 3B

Numerical    Real

F[N]

Nominal working
conditions

Working conditions

FIG. 4

EP 3 608 743 A1

FIG. 5

FIG. 7

FIG. 6

FIG. 8

EP 3 608 743 A1

FIG. 9

EP 3 608 743 A1

FIG. 10

FIG. 11

Europäisches
Patentamt

European
Patent Office

Office européen
des brevets

# EUROPEAN SEARCH REPORT

Application Number

EP 19 18 6601

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 03/052533 A1 (UNIV HONG KONG CHINESE [CN]; XU YANGSHENG [CN] ET AL.) 26 June 2003 (2003-06-26) * page 7, line 11 - line 28; figure 1 * * page 7, line 40 - page 9, line 11; figures 2-5 * * page 9, line 34 - page 10, line 17; figures 9A-G * | 1-5 | INV. G05B23/02 B21D22/02 G05B13/04 |
| Y | EP 3 001 265 A1 (PALO ALTO RES CT INC [US]) 30 March 2016 (2016-03-30) * paragraph [0009] * * paragraph [0020] - paragraph [0022]; figure 1 and 2 * * paragraph [0034] - paragraph [0038]; figure 5 * * paragraph [0044] * * paragraph [0001] * * paragraph [0004] * | 1-5 | |
| Y | US 2014/019099 A1 (ZHU XINHAI [US] ET AL) 16 January 2014 (2014-01-16) * paragraph [0002]; figure 1 * * paragraph [0019] * * paragraph [0025]; figure 6 * | 1-5 | TECHNICAL FIELDS SEARCHED (IPC) G05B B21D |
| A,D | US 6 341 243 B1 (BOURNE DAVID ALLAN [US] ET AL) 22 January 2002 (2002-01-22) * column 15, line 20 - column 16, line 65; figure 5 * | 1-5 | |

The present search report has been drawn up for all claims

| Place of search | Date of completion of the search | Examiner |
|---|---|---|
| Munich | 6 December 2019 | Bernard, Eddy |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 19 18 6601

This annex lists the patent family members relating to the patent documents cited in the above-mentioned European search report.
The members are as contained in the European Patent Office EDP file on
The European Patent Office is in no way liable for these particulars which are merely given for the purpose of information.

06-12-2019

| Patent document cited in search report | | Publication date | Patent family member(s) | | Publication date |
|---|---|---|---|---|---|
| WO 03052533 | A1 | 26-06-2003 | AU | 2002218957 A1 | 30-06-2003 |
| | | | CN | 1430721 A | 16-07-2003 |
| | | | HK | 1053866 A1 | 09-09-2005 |
| | | | TW | 515738 B | 01-01-2003 |
| | | | WO | 03052533 A1 | 26-06-2003 |
| EP 3001265 | A1 | 30-03-2016 | EP | 3001265 A1 | 30-03-2016 |
| | | | US | 2016091393 A1 | 31-03-2016 |
| | | | US | 2019094108 A1 | 28-03-2019 |
| US 2014019099 | A1 | 16-01-2014 | CN | 103544335 A | 29-01-2014 |
| | | | US | 2014019099 A1 | 16-01-2014 |
| US 6341243 | B1 | 22-01-2002 | DE | 69529607 D1 | 20-03-2003 |
| | | | DE | 69529607 T2 | 18-09-2003 |
| | | | DE | 69534977 T2 | 06-06-2007 |
| | | | EP | 0744046 A1 | 27-11-1996 |
| | | | JP | 4221061 B2 | 12-02-2009 |
| | | | JP | 4925742 B2 | 09-05-2012 |
| | | | JP | H09509618 A | 30-09-1997 |
| | | | JP | 2007030042 A | 08-02-2007 |
| | | | JP | 2007050451 A | 01-03-2007 |
| | | | US | 6341243 B1 | 22-01-2002 |
| | | | US | 2002016647 A1 | 07-02-2002 |
| | | | US | 2004019402 A1 | 29-01-2004 |
| | | | WO | 9615481 A2 | 23-05-1996 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6341243 B1
- CN 107328787 A
- CN 104942095 A
- CN 105689458 A
- CN 106623582 A